# FASCICULE DE BREVET EUROPEEN

(11) **EP 4 354 230 B1**
(45) Date de publication et mention de la délivrance du brevet: **22.04.2026**
(21) Numéro de dépôt: 22201030.8
(22) Date de dépôt: 12.10.2022
(51) Int. Cl.: G04D 3/06, G04D 1/00

(54) **PRESSE POUR LE CHASSAGE D'UNE LUNETTE OU D'UNE GLACE DE MONTRE**
PRESSE ZUM AUSPRESSEN EINER LUNETTE ODER EINES UHRENGLASES
PRESS FOR PRESS-FITTING A BEZEL OR A WATCH GLASS

(43) Date de publication de la demande: 17.04.2024
(73) Titulaire: Omega SA, 2502 Biel/Bienne (CH)
(72) Inventeur: Heusler, Christophe, 2533 Evilard (CH)
(74) Mandataire: ICB SA

(56) Documents cités:
- CH-A- 177 654
- CH-A2- 717 273
- FR-A- 1 495 452
- US-A- 1 767 935
- US-A- 4 210 798

## Description

### Domaine technique de l'invention

L'invention relève du domaine de l'outillage dans le secteur de la microtechnique, en particulier dans le secteur horloger, par exemple destiné au service après-vente.

Plus particulièrement, l'invention concerne une presse pour le chassage d'une lunette ou d'une glace de montre.

### Arrière-plan technologique

Afin de réaliser des opérations de service après-vente d'une montre, il est parfois nécessaire de déchasser la glace d'une montre. A cet effet, des outils ont été développés pour déposer les glaces de montre, tels que ceux mentionnés dans l'état de la technique du brevet EP3835888, ou encore dans les documents US4210798A et FR1495452A.

Une fois les opérations de service réalisées, il est nécessaire de chasser la glace, et le cas échéant la lunette, sur la carrure de la montre. Des presses permettant de réaliser cette opération sont connues et sont composées d'un posage permettant de maintenir la carrure dans une position prédéfinie en regard d'une potence dans laquelle coulisse un porte-outil suite à une action d'un utilisateur sur un organe de commande. Le porte-outil porte un outil destiné à appliquer une pression contre la glace de sorte à chasser celle-ci dans l'ouverture de la carrure prévue à cet effet.

Généralement, le posage d'une presse est amovible de sorte que l'utilisateur puisse disposer de plusieurs posages de différentes dimensions afin de s'adapter aux différentes tailles de carrures de montres sur lesquelles il est susceptible d'opérer des services. L'utilisateur doit donc veiller à disposer d'un nombre suffisamment important de posages différents afin de pouvoir effectuer des services sur une grande diversité de montres.

La présente invention vise notamment à permettre de s'affranchir de ces différents posages et notamment des inconvénients liés à leur stockage et à leur utilisation.

### Résumé de l'invention

L'invention résout les inconvénients précités en proposant une solution permettant de chasser une glace ou une lunette dans une carrure d'une montre, quelles que soient les dimensions de ladite carrure, simplement et rapidement, avec une presse disposant d'un unique posage.

A cet effet, la présente invention concerne une presse selon les termes de la revendication 1 telle qu'annexée.

Dans des modes particuliers de réalisation, le posage comporte un organe de liaison relié cinématiquement aux mors de sorte que lorsqu'il est sollicité, il entraîne les mors en déplacement vers l'axe A-A, à l'encontre des efforts exercés par l'organe élastique.

Dans des modes particuliers de réalisation, le posage comprend une embase présentant des rainures rectilignes et l'organe de liaison est sous la forme d'un plateau agencé de manière mobile en rotation par rapport à l'embase, autour de l'axe A-A, et comprend des rainures hélicoïdales. Les mors sont engagés en coulissement dans les rainures de l'embase et du plateau de sorte qu'une rotation du plateau autour de l'axe A-A entraîne les mors en translation dans le plan P.

Dans des modes particuliers de réalisation, les rainures rectilignes présentent une section transversale en T, les mors comportant chacun une tête par laquelle ils sont destinés à coopérer avec la carrure, ladite tête étant fixée à un pied présentant une forme complémentaire à celle des rainures rectilignes de sorte à coulisser dans une desdites rainures.

Dans des modes particuliers de réalisation, l'organe élastique est sollicité en torsion et est relié par une première extrémité au plateau, et par une seconde extrémité, à l'embase.

Dans des modes particuliers de réalisation, le plateau comporte un organe de préhension de sorte à pouvoir être entraîné en rotation sur sollicitation dudit organe de préhension par un utilisateur à l'encontre de la force générée par l'organe élastique.

Dans des modes particuliers de réalisation, les mors sont régulièrement répartis autour de l'axe A-A.

Dans des modes particuliers de réalisation, le posage comporte un élément de positionnement angulaire relié à l'embase et adapté à coopérer avec la carrure pour supprimer tout degré de liberté en rotation autour de l'axe A-A de cette dernière.

Dans des modes particuliers de réalisation, au moins un des mors comporte une représentation graphique pour le guidage de l'orientation, par rapport à la carrure, de la lunette ou de la glace à chasser.

Dans des modes particuliers de réalisation, le posage comporte une semelle de réglage adaptée à ajuster la tension de l'organe élastique, recevant la seconde extrémité de l'organe élastique en fixation et étant fixée à l'embase de manière mobile en rotation, ladite semelle comprenant un organe de blocage en rotation par rapport à l'embase.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en perspective d'une presse selon un exemple préféré de réalisation de l'invention, comprenant un posage maintenant en position une carrure d'une montre sur laquelle est chassée une lunette ;
- la figure 2 représente une vue de détail du posage de la presse de la figure 1 ;
- la figure 3 représente une vue éclatée du posage de la figure 2.

### Description détaillée de l'invention

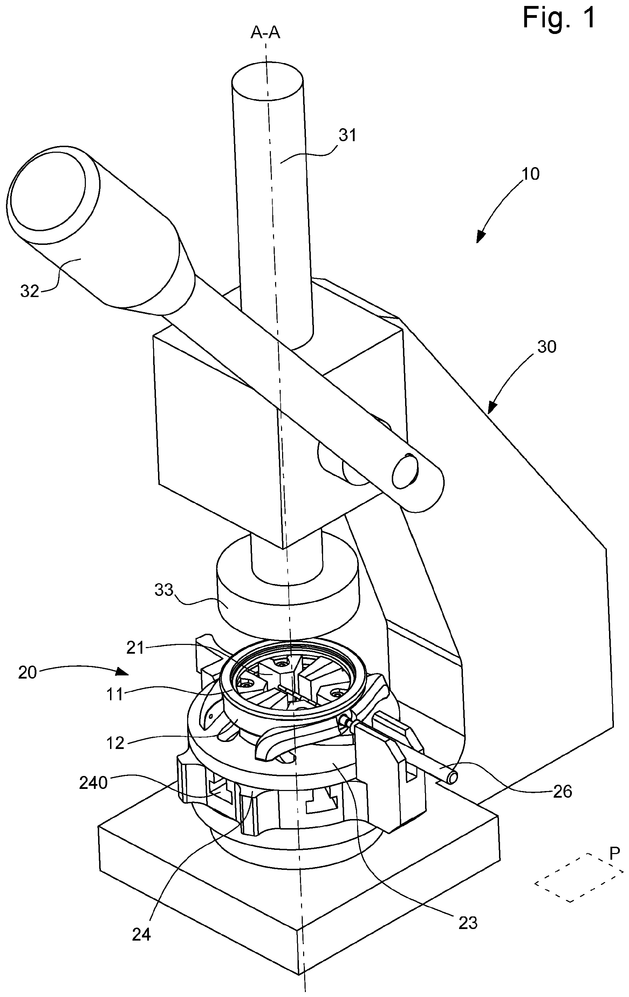

La figure 1 montre une presse 10 pour le chassage d'une glace ou d'une lunette 11 sur une carrure 12 d'une montre comprenant un posage 20 destiné à maintenir en position, c'est-à-dire sans degré de liberté, la carrure 12 afin de recevoir, lors d'une opération de chassage, de ladite glace ou ladite lunette 11.

La presse 10 comporte par ailleurs, pour la réalisation de cette opération de chassage, une potence 30 supportant un porte-outil 31 mobile en translation et coopérant avec un organe de manœuvre 32, de sorte à coulisser par rapport à ladite potence 30, par exemple dans une ouverture dans laquelle il est engagé, selon un axe A-A lors d'une sollicitation dudit organe de manœuvre 32 par un utilisateur. Il va de soi que l'axe A-A est destinée à correspondre avec le centre de la carrure 12, tel que représenté sur les figures.

Un outil 33, tel qu'un tasseau de presse connu en soi par l'homme du métier, est fixé au porte-outil 31, par exemple par serrage, par aimantation, par vissage ou par tout autre moyen approprié.

En particulier, l'organe de manœuvre 32 peut être formé par un levier mobile en rotation comme illustré dans l'exemple de réalisation de l'invention sur la figure 1. Notamment, le porte-outil 31 peut comporter un arbre cranté sur une portion de sa longueur afin de former une crémaillère (non visible sur la figure 1) avec les dents de laquelle coopère une roue dentée dont est doté l'organe de manœuvre 32, ladite roue dentée étant fixée au levier.

Avantageusement, le posage 20 présente des dimensions radiales ajustables, lesdites dimensions étant définies dans un plan P orthogonal à l'axe A-A. Le terme radial est ici employé en référence à la dimension radiale de la carrure 12 destinée à être maintenue en position par le posage 20.

De la sorte, il peut s'adapter aux dimensions de toutes carrures, ce qui permet d'éviter l'utilisation de posages amovibles et ainsi permet de faciliter l'opération de posage.

Plus précisément, le posage 20 comporte au moins deux mors 21, préférentiellement au moins trois, régulièrement répartis autour de l'axe A-A, et destinés à coopérer avec la carrure 12 par serrage de sorte à assurer son maintien en position. Chaque mors 21 est mobile dans le plan P, comme décrit en détail ci-après. Dans l'exemple de réalisation de l'invention, le posage 20 comporte six mors 21, diamétralement opposés deux à deux. Cette caractéristique permet de répartir au mieux les efforts appliqués contre la carrure 12.

Dans l'exemple préféré de réalisation de l'invention, sous l'effet d'une sollicitation d'un organe élastique 22 agencé dans le posage 20, les mors 21 tendent à s'écarter les uns des autres, c'est-à-dire de l'axe A-A, afin de pouvoir prendre appui contre une surface interne de la carrure 12, de sorte à appliquer des efforts de serrage sur ladite carrure 12. Ainsi, le maintien en position de la carrure 12 ne présente aucun risque d'endommager celle-ci sur des surfaces visibles.

Par ailleurs, les mors 21 sont avantageusement destinés à recevoir en appui la carrure 12, et en particulier un épaulement de cette dernière, sur une face d'appui supérieure inscrite dans un plan orthogonal à l'axe A-A. Cette caractéristique participe à la stabilité de la carrure 12 lors de l'opération de chassage dans la mesure où les efforts générés par l'outil 33 lors de cette l'opération sont transmis par la carrure 12 sur ces faces d'appui supérieures.

Afin d'entraîner en déplacement les mors 21, le posage 20 comprend un organe de liaison relié cinématiquement aux mors 21 de sorte que lorsqu'il est sollicité à l'encontre des efforts exercés par l'organe élastique 22, il entraîne les mors 21 en déplacement vers l'axe A-A, c'est-à-dire les uns vers les autres, tel que décrit dans la suite du texte. L'organe de liaison prend la forme d'un plateau 23 dans l'exemple préféré de réalisation de l'invention représenté sur les figures 1 à 3.

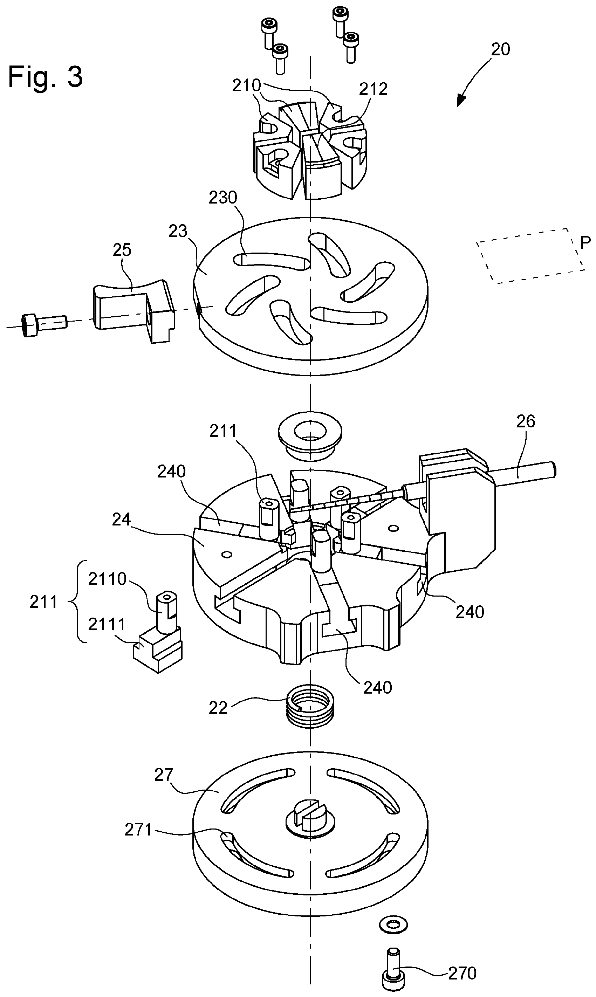

Dans l'exemple préféré de réalisation de l'invention, comme le montre la vue éclatée de la figure 3, le posage 20 comprend une embase 24 fixe par rapport à la potence 30. Le plateau 23 est agencé sur l'embase 24 de manière mobile en rotation, autour de l'axe A-A, par exemple par l'intermédiaire d'un palier lisse, d'un roulement à billes ou de tout autre moyen approprié.

L'embase 24 présente des rainures rectilignes 240 s'étendant en longueur dans un plan orthogonal à l'axe A-A, par exemple selon des axes longitudinaux passant par l'axe A-A, lesdites rainures rectilignes 240 étant régulièrement réparties autour de l'axe A-A. Le plateau 23 comprend des rainures hélicoïdales 230 régulièrement réparties autour de l'axe A-A et dont chacune est partiellement en regard d'une rainure rectiligne 240, lesdites rainures hélicoïdales s'étendant en longueur également dans un plan orthogonal à l'axe A-A. Les rainures hélicoïdales 230 sont préférentiellement curvilignes.

Comme le montrent les figures, l'embase 24 et le plateau 23 comportent respectivement un nombre de rainures rectilignes 240 et de rainures hélicoïdales 230 correspondant au nombre de mors 21, de sorte que chaque mors 21 soit engagé en coulissement dans une rainure rectiligne 240 et dans une rainure hélicoïdale 230. Ainsi, une rotation du plateau 23 autour de l'axe A-A entraîne les mors 21 en translation selon des axes orthogonaux à l'axe A-A, lesdits mors 21 s'écartant les uns des autres ou se rapprochant les uns des autres selon le sens de rotation dudit plateau 23.

De manière équivalente, on pourrait envisager que l'embase 24 comporte des rainures hélicoïdales 230 et que le plateau 23 comporte des rainures rectilignes 240.

Comme le montrent les figures 1 à 3 dans un exemple préféré de réalisation de l'invention, les rainures rectilignes 240 présentent une section transversale en T s'étendant depuis une ouverture débouchant en vis-à-vis du plateau 23 jusqu'à un fond.

Par ailleurs, dans cet exemple préféré de réalisation, les mors 21 comportent chacun une tête 210 reposant contre le plateau 23 et par laquelle ils sont destinés à coopérer avec la carrure 12, chaque tête 210 étant fixée à un pied 211. Les pieds 211 sont chacun engagés, d'une part, à travers une rainure hélicoïdale 230, par une première portion 2110, et d'autre part, dans une rainure rectiligne 240, par une seconde portion 2111, tel que visible sur la figure 3. La seconde portion 2111 des pieds 211 présente avantageusement une forme complémentaire de celle des rainures rectilignes 240, sorte à être contraint à un unique degré de liberté en translation. Ainsi, la rotation du plateau 23 contraint chaque rainure hélicoïdale 230, par l'un de ses flancs, à appliquer des efforts de poussée sur la première portion 2110 du pied 211 avec lequel il coopère, ce qui provoque la translation de la seconde portion 2111 de ce pied 211, et donc le coulissement de chaque mors 21.

Les mors 21 peuvent être amovibles de sorte à pouvoir être remplacés si besoin, ce qui participe à simplifier les opérations de maintenance de la presse 10. Dans l'exemple de réalisation représenté sur les figures et visible en détail sur la vue éclatée de la figure 3, chaque tête 210 est fixée à un pied 211 par vissage d'une vis engagée dans un taraudage réalisé dans le pied 211.

Préférentiellement, l'organe élastique 22 est destiné à travailler en torsion et est relié, par une première extrémité, au plateau 23, et par une seconde extrémité, à l'embase 24, de sorte à entraîner en rotation le plateau 23 par rapport à l'embase 24. L'organe élastique 22 est par exemple un ressort hélicoïdal de torsion.

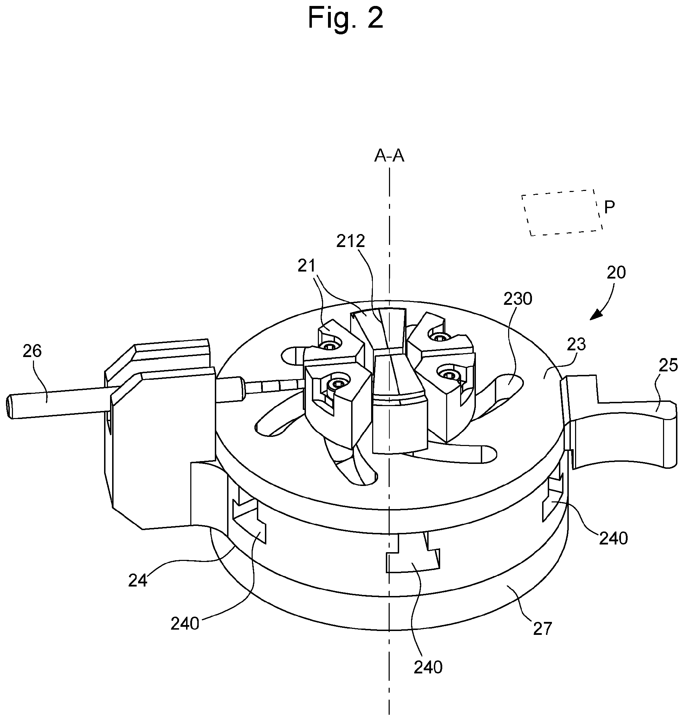

Dans l'exemple de réalisation représenté sur les figures 1 à 3, le plateau 23 comporte avantageusement un organe de préhension 25 de sorte à pouvoir être pivoté par un utilisateur à l'encontre de la force générée par l'organe élastique 22. L'organe élastique 22 peut alors être contraint afin de rapprocher les mors 21 les uns des autres, par exemple jusqu'à venir dans une position extrême en butée, au plus près de l'axe A-A, comme le montre la figure 2, ce qui permet d'engager, sur ces mors 21, une carrure 12 sur laquelle une glace ou une lunette est à chasser. Le maintien en position de la carrure 12 est assuré lorsque l'utilisateur libère l'organe de préhension 25. En effet, le plateau 23 pivote alors sous la sollicitation de l'organe élastique 22, entraînant le déplacement des mors 21 jusqu'à venir en contact contre la carrure 12 et ainsi appliquer des efforts de serrage sur ladite carrure 12.

L'organe de préhension 25 est représenté sous la forme d'une poignée destinée à être manipulée par un utilisateur sur les figures 1 à 3. Toutefois, dans d'autres exemples de réalisation de l'invention, il peut être constitué d'un moteur électrique relié cinématiquement au plateau 23 et piloté par un module de commande.

Le posage 20 peut comporter un élément de positionnement angulaire 26, comme représenté sur les figures 1 à 3, relié à l'embase 24 et adapté à coopérer avec la carrure 12 pour supprimer tout éventuel degré de liberté en rotation autour de l'axe A-A de cette dernière. Cet élément de positionnement angulaire 26, en plus d'assurer encore davantage le maintien en position de la carrure 12, permet de garantir un parfait positionnement par rapport à l'outil 33 lors de sa mise en position.

Un tel élément de positionnement angulaire 26 est formé, sur les figures 1 à 3, par une tige mobile en translation supportée par un bras relié à la périphérie de l'embase 24, destinée à s'engager dans une ouverture de la carrure 12, par exemple en ouverture destinée à recevoir une tige de couronne.

Avantageusement, le posage 20 peut comporter, en outre, une semelle 27 de réglage permettant d'ajuster la tension de l'organe élastique 22 et par conséquent, l'intensité des efforts qu'il est apte à fournir. Cette semelle 27 repose sous l'embase 24 à laquelle elle est fixée de manière amovible et reçoit la seconde extrémité de l'organe élastique 22 en fixation.

La semelle 27 est agencée avec un degré de mobilité en rotation par rapport à ladite embase 24, par exemple par rapport à l'axe A-A, de sorte que la tension de l'organe élastique 22 varie selon la position angulaire de la semelle 27 par rapport à l'embase 24. La semelle 27 comprend par ailleurs un organe de blocage en rotation, formé par exemple, comme le montre la figure 3, par une vis 270 destinée à être engagée d'une part, à travers une rainure 271 de la semelle 27 s'étendant selon un arc de cercle dont le centre coïncide avec l'axe de rotation de la semelle 27, et d'autre part, dans un taraudage réalisé dans une face de l'embase 24 opposée aux rainures rectilignes 240. Ainsi, par vissage ou dévissage de la vis, la rotation relative de la semelle 27 et de l'embase 24 est libre ou non. Préférentiellement, la semelle 27 comporte plusieurs vis 270 engagées dans des rainures 271 et des taraudages de l'embase 24. D'autres organes de blocage en rotation sont envisageables, tel que des goupilles, etc.

Avantageusement, la présente invention permet de maitriser l'orientation de la lunette 11 ou de la glace par rapport à la carrure 12 lors de l'opération de chassage, par exemple lorsque ladite lunette 11 est décorée ou comporte des index ou lorsque ladite glace comporte un élément grossissant. En particulier, la tête 210 d'un mors 21 peut comporter une représentation graphique 212, par exemple sur la face d'appui, pour le guidage en position angulaire de la lunette 11 ou de la glace à chasser sur la carrure 12. Plus précisément, la représentation graphique 212 peut être réalisée de sorte à constituer un repère avec lequel l'utilisateur doit aligner la lunette ou la glace.

## Revendications

1. Presse (10) pour le chassage d'une glace ou d'une lunette (11) dans une carrure (12) d'une montre, comprenant :
- un posage (20) destiné à maintenir en position la carrure (12),
- une potence (30) supportant un porte-outil (31) auquel est fixé un outil (33), ledit porte-outil (31) étant mobile en translation et coopérant avec un organe de manœuvre (32) de sorte à coulisser par rapport à ladite potence (30) selon un axe A-A sur sollicitation dudit organe de manœuvre (32),
le posage (20) comportant au moins deux mors (21) destinés à coopérer avec la carrure (12) de sorte à assurer son maintien en position, chaque mors (21) étant mobile dans un plan P orthogonal à l'axe A-A, les mors (21) étant, en outre, destinés à prendre appui contre une surface interne de la carrure (12) et tendant à s'écarter les uns des autres sous la sollicitation d'un organe élastique (22) dont est doté le posage (20), de sorte à appliquer des efforts de serrage sur ladite carrure (12).

2. Presse (10) selon la revendication 1, dans laquelle le posage (20) comporte un organe de liaison relié cinématiquement aux mors (21) de sorte que lorsqu'il est sollicité, il entraîne les mors (21) en déplacement vers l'axe A-A, à l'encontre des efforts exercés par l'organe élastique (22).

3. Presse (10) selon la revendication 2, dans laquelle le posage (20) comprend une embase (24) présentant des rainures rectilignes (240), l'organe de liaison étant sous la forme d'un plateau (23) agencé de manière mobile en rotation par rapport à l'embase (24), autour de l'axe A-A, et comprend des rainures hélicoïdales (230), les mors (21) étant engagés en coulissement dans les rainures de l'embase (24) et du plateau (23) de sorte qu'une rotation du plateau (23) autour de l'axe A-A entraîne les mors (21) en translation dans le plan orthogonal à l'axe A-A.

4. Presse (10) selon la revendication 3, dans laquelle les rainures rectilignes (240) présentent une section transversale en T, les mors (21) comportant chacun une tête (210) par laquelle ils sont destinés à coopérer avec la carrure (12), ladite tête (210) étant fixée à un pied (211) présentant une forme complémentaire à celle des rainures rectilignes (240) de sorte à coulisser dans une desdites rainures.

5. Presse (10) selon la revendication 3 ou 4, dans laquelle l'organe élastique (22) est sollicité en torsion et est relié par une première extrémité au plateau (23), et par une seconde extrémité, à l'embase (24).

6. Presse (10) selon la revendication 5, dans laquelle le plateau (23) comporte un organe de préhension (25) de sorte à pouvoir être entraîné en rotation sur sollicitation dudit organe de préhension par un utilisateur à l'encontre de la force générée par l'organe élastique (22).

7. Presse (10) selon l'une des revendications 1 à 6, dans laquelle les mors (21) sont régulièrement répartis autour de l'axe A-A.

8. Presse (10) selon l'une des revendications 1 à 7, dans laquelle le posage (20) comporte un élément de positionnement angulaire (26) relié à l'embase (24) et adapté à coopérer avec la carrure (12) pour supprimer tout degré de liberté en rotation autour de l'axe A-A de cette dernière.

9. Presse (10) selon la revendication 8, dans laquelle au moins un des mors (21) comporte une représentation graphique (212) pour le guidage de l'orientation, par rapport à la carrure (12), de la lunette (11) ou de la glace à chasser.

10. Presse (10) selon les revendications 1 et 5, dans laquelle le posage (20) comporte une semelle (27) de réglage adaptée à régler la tension de l'organe élastique (22), recevant la seconde extrémité de l'organe élastique (22) en fixation et étant fixée à l'embase (24) de manière mobile en rotation, ladite semelle (27) comprenant un organe de blocage en rotation par rapport à l'embase (24).

## Patentansprüche

1. Presse (10) zum Einpressen eines Glases oder einer Lünette (11) in ein Gehäusemittelteil (12) einer Uhr, umfassend:
- eine Aufnahme (20), die dazu bestimmt ist, das Gehäusemittelteil (12) in Position zu halten,
- einen Ständer (30), der einen Werkzeughalter (31 ) trägt, an dem ein Werkzeug (33) befestigt ist, wobei der Werkzeughalter (31) in Translation beweglich ist und mit einem Betätigungsorgan (32) zusammenwirkt, so dass der Werkzeughalter bei Betätigung des Betätigungsorgans (32) relativ zum Ständer (30) entlang einer Achse A-A gleitet,
wobei die Aufnahme (20) mindestens zwei Spannbacken (21) aufweist, die zur Zusammenarbeit mit dem Gehäusemittelteil (12) bestimmt sind, um dessen Halten in Position sicherzustellen, wobei jede Spannbacke (21) in einer Ebene P beweglich ist, die orthogonal zur Achse A-A verläuft, wobei die Spannbacken (21) außerdem dazu bestimmt sind, gegen eine innere Fläche des Gehäusemittelteils (12) anzulegen und unter der Einwirkung eines elastischen Organs (22), mit dem die Aufnahme (20) versehen ist, dazu neigen, sich voneinander zu entfernen, um Spannkräfte auf das Gehäusemittelteil (12) auszuüben.

2. Presse (10) nach Anspruch 1, wobei die Aufnahme (20) ein mit den Spannbacken (21) kinematisch verbundenes Verbindungselement aufweist, so dass es bei Betätigung die Spannbacken (21) gegen die von dem elastischen Organ (22) ausgeübten Kräfte in Richtung der Achse A-A bewegt.

3. Presse (10) nach Anspruch 2, bei der die Aufnahme (20) eine Basis (24) mit geradlinigen Nuten (240) umfasst, wobei das Verbindungselement in Form einer Platte (23) ausgebildet ist, die relativ zur Basis (24) um die Achse A-A drehbeweglich angeordnet ist und schraubenförmige Nuten (230) aufweist, wobei die Spannbacken (21) gleitend in die Nuten der Basis (24) und der Platte (23) eingreifen, so dass eine Drehung der Platte (23) um die Achse A-A die Spannbacken (21) in der zur Achse A-A orthogonalen Ebene in Translation versetzt.

4. Presse (10) nach Anspruch 3, bei der die geradlinigen Nuten (240) einen T-förmigen Querschnitt aufweisen, wobei die Spannbacken (21) jeweils einen Kopf (210) aufweisen, durch den sie mit dem Gehäusemittelteil (12) zusammenwirken sollen, wobei der Kopf (210) an einem Fuß (211) befestigt ist, der eine zur Form der geradlinigen Nuten (240) komplementäre Form aufweist, so dass er in einer dieser Nuten gleiten kann.

5. Presse (10) nach Anspruch 3 oder 4, wobei das elastische Organ (22) auf Torsion beansprucht wird und mit einem ersten Ende mit der Platte (23) und mit einem zweiten Ende mit der Basis (24) verbunden ist.

6. Presse (10) nach Anspruch 5, bei der die Platte (23) ein Greiforgan (25) aufweist, so dass die Platte bei Betätigung des Greiforgans durch einen Benutzer gegen die von dem elastischen Organ (22) erzeugte Kraft in Drehung versetzt werden kann.

7. Presse (10) nach einem der Ansprüche 1 bis 6, bei der die Spannbacken (21) regelmäßig um die Achse A-A verteilt sind.

8. Presse (10) nach einem der Ansprüche 1 bis 7, bei der die Aufnahme (20) ein Winkelpositionierelement (26) aufweist, das mit der Basis (24) verbunden ist und dazu eingerichtet ist, mit dem Gehäusemittelteil (12) zusammenzuwirken, um jeden Rotationsfreiheitsgrad des Gehäusemittelteils um die Achse A-A zu beseitigen.

9. Presse (10) nach Anspruch 8, bei der mindestens eine der Spannbacken (21) eine grafische Darstellung (212) zur Führung der Ausrichtung der Lünette (11) oder des einzupressenden Glases relativ zum Gehäusemittelteil (12) aufweist.

10. Presse (10) nach den Ansprüchen 1 und 5, bei der die Aufnahme (20) eine Einstellsohle (27) aufweist, die dazu eingerichtet ist, die Vorspannung des elastischen Organs (22) einzustellen, die das zweite Ende des elastischen Organs (22) zur Befestigung aufnimmt und drehbeweglich an der Basis (24) befestigt ist, wobei die Sohle (27) ein Drehverriegelungsorgan gegenüber der Basis (24) umfasst.

## Claims

1. Press (10) for driving a crystal or a bezel (11) into a middle (12) of a watch, comprising:
- a support (20) to hold the middle (12) in position,
- a bracket (30) supporting a tool-holder (31) to which a tool (33) is attached, said tool-holder (31) being movable in translation and cooperating with a handling member (32) so as to slide relative to said bracket (30) along an axis A-A upon actuation of said handling member (32),
the support (20) comprising at least two jaws (21) designed to cooperate with the middle (12) so as to hold it in position, each jaw (21) being movable in a plane P orthogonal to the axis A-A, the jaws (21) being, moreover, designed to bear against an internal surface of the middle (12) and tending to move away from one another hen solicited by a resilient member (22) with which the support (20) is equipped, so as to apply clamping forces to said middle (12).

2. Press (10) according to claim 1, wherein the support (20) includes a connecting member kinematically connected to the jaws (21) so that, when solicited, it displaces the jaws (21) towards the axis A-A, against the forces exerted by the resilient member (22).

3. Press (10) according to claim 2, wherein the support (20) comprises a base (24) with rectilinear grooves (240), the connecting member being in the form of a plate (23) arranged so as to be rotatable relative to the base (24), about the axis A-A, and comprises helical grooves (230), the jaws (21) being slidably engaged in the grooves of the base (24) and of the plate (23) so that rotation of the plate (23) about the axis A-A causes the jaws (21) to translate in the plane orthogonal to the axis A-A.

4. Press (10) according to claim 3, wherein the rectilinear grooves (240) have a T-shaped cross-section, the jaws (21) each including a head (210) via which they are intended to cooperate with the middle (12), said head (210) being attached to a foot (211) having a shape complementary to that of the rectilinear grooves (240) so as to slide in one of said grooves.

5. Press (10) according to claim 3 or 4, wherein the resilient member (22) is torsionally stressed and is connected at a first end to the plate (23) and at a second end to the base (24).

6. Press (10) according to claim 5, wherein the plate (23) includes a gripping member (25) so that it can be rotated, when said gripping member is actuated by a user, against the force generated by the resilient member (22).

7. Press (10) according to one of claims 1 to 6, wherein the jaws (21) are evenly distributed around the axis A-A.

8. Press (10) according to one of claims 1 to 7, wherein the support (20) includes an angular positioning element (26) connected to the base (24) and adapted to cooperate with the middle (12) to eliminate any degree of rotational freedom about the axis A-A thereof.

9. Press (10) according to claim 8, wherein at least one of the jaws (21) includes a graphic representation (212) for guiding the orientation, relative to the middle (12), of the bezel (11) or crystal to be driven in.

10. Press (10) according to claims 1 and 5, wherein the support (20) includes an adapter sole (27) adapted to adjust the tension of the resilient member (22), receiving the second end of the resilient member (22) by way of attachment and being rotatably attached to the base (24), said sole (27) comprising a member for locking it against rotation with respect to the base (24).
